# EUROPÄISCHE PATENTANMELDUNG

(11) **EP 1 133 199 A1**
(43) Veröffentlichungstag der Anmeldung: **12.09.2001**
(21) Anmeldenummer: 01104137.3
(22) Anmeldetag: 21.02.2001
(51) Int. Cl.: H04Q 3/62, H04Q 3/00, H04M 3/42

(54) **Verfahren zur Bereitstellung von für eine in einem Kommunikationsnetz festgelegten Teilnehmergruppe spezifischen Leistungs- und/oder Dienstmerkmalen**

(30) Priorität: 08.03.2000 DE 10011212
(71) Anmelder: SIEMENS AKTIENGESELLSCHAFT, 80333 München (DE)
(72) Erfinder: Schneider, Bernd, 81479 München (DE); Strabler, Roland, 1100 Wien (AT)

(57) **Zusammenfassung**

Zur Bereitstellung von für eine in einem Kommunikationsnetz (PSTN1) festgelegten Teilnehmergruppe spezifischen Leistungs- und/oder Dienstmerkmalen für einen an wenigstens an eine Kommunikationsendeinrichtung (TLN2, TLN3) der Teilnehmergruppe gerichteten, von einer nicht der Teilnehmergruppe zugeordneten Kommunikationsendeinrichtung (TLN1, TLN4) initiierten, ankommenden Ruf wird wie folgt vorgegangen: In einer im Kommunikationsnetz vorhandenen, für die Teilnehmergruppe zuständigen Vermittlungsstelle (ZVST) werden die beim Verbindungsaufbau des ankommenden Rufes weiterzuleitenden Signalisierungsinformationen derart modifiziert, daß diesem Ruf die für die Teilnehmergruppe spezifischen Leistungs- und/oder Dienstmerkmale bereitgestellt werden.

## Beschreibung

Die Erfindung betrifft ein Verfahren zur Bereitstellung von für eine in einem Kommunikationsnetz festgelegten Teilnehmergruppe spezifischen Leistungs- und/oder Dienstmerkmalen für einen an wenigstens eine Kommunikationsendeinrichtung der Teilnehmergruppe gerichteten ankommenden Ruf. Der Ruf wird dabei von einer nicht der Teilnehmergruppe zugeordneten Kommunikationsendeinrichtung initiiert.

Solche Teilnehmergruppen stehen z. B. mit dem Merkmal "Centrex" (Central Office and Exchange) im Zusammenhang. Das Merkmal "Centrex" ermöglicht, daß Kommunikationsendeinrichtungen, die an eine gemeinsame oder jeweils an verschiedene Vermittlungsstellen eines Kommunikationsnetzes, üblicherweise eines öffentlichen Kommunikationsnetzes, über Anschlußleitungen angeschlossen sind, zu einer Centrex-Gruppe zusammengefaßt werden. Den zu der Centrex-Gruppe gehörenden Teilnehmern können dann von der für sie zuständigen Vermittlungsstelle nahezu die gleichen Dienstmerkmale zur Verfügung gestellt werden, die ihnen eine Nebenstellenanlage (PBX) böte, wenn deren Teilnehmerendeinrichtungen an diese angeschlossen wären. Solche Centrex-Gruppen können weiterhin in Centrex-Untergruppen, z. B. Geschäftsgruppen, unterteilt werden, denen eine Auswahl an Dienstmerkmalen aus dem Pool der für Centrex-Teilnehmer möglichen Dienstmerkmalen zur Verfügung gestellt werden. Die im Zusammenhang mit Centrex-Gruppen stehenden Dienstmerkmale sind beispielsweise in einer Kundenbroschüre "GeoCentrex: The Best Catch For Your Network" der Siemens AG, herausgegeben im Jahre 1995 vom Geschäftsgebiet Telekommunikationsnetze, Hofmannstr. 51, D-81359 München, Bestell-Nr. A-30808-X3093-X100-1-7635 beschrieben.

Teilnehmer oder Teilnehmergruppen aus dem Kommunikationsnetz, z.B. des gleichen oder eines fremden Netzbetreibers bzw. eines Mobilfunknetzes, sollen die Möglichkeit bekommen, Leistungs- bzw. Dienstmerkmale einer im Kommunikationsnetz netzweit festgelegten Teilnehmergruppe, z.B. einer Centrex-Geschäftsgruppe, nutzen zu können. Dabei soll der von einer Kommunikationsendeinrichtung eines externen Teilnehmers ausgehender Ruf an eine zur Teilnehmergruppe zugeordneten Kommunikationsendeinrichtung eines Teilnehmer bzw. einer Teilnehmergruppe als zur Teilnehmergruppe zugehörig, z.B. durch Anzeige eines Teilnehmernamens oder einer privaten Rufnummern, in Erscheinung treten.

Derzeit kann in einem öffentlichen Kommunikationsnetz einem externen Teilnehmer eine solche Möglichkeit nur durch einen administrativen Eingriff in den Rufnummernplan der Teilnehmergruppe bzw. in die Teilnehmerdaten angeboten werden.

Im Zusammenhang mit Nebenstellenanlagen eines mit einem öffentlichen Kommunikationsnetz überlagerten privaten Netzes werden zur Bildung einer netzweiten Teilnehmergruppe heute teure Mietleitungen oder sogenannte VPN (Virtual Privat Networks) unter Ausnutzung einer IN-Architektur (intelligente Netze) verwendet. Bei VPNs unter Nutzung der IN-Architektur sind der private Rufnummernplan der Teilnehmergruppe und die Teilnehmerdaten auf einer separaten im Netz zentralisiert angeordneten Datenbank im sogenannten SCP (Service Control Point) hinterlegt. Demnach sind für die Realisierung eines solchen Teilnehmergruppennetzes zusätzlichen Hardwareaufwendungen notwendig. Ein weiterer erheblicher Nachteil ist darin zu sehen, daß durch eine Teilnehmerauthentifizierung am Netzzugang eine Steuerung der Leistungs- bzw. Dienstmerkmale sowie die Verkehrslenkung eine zusätzliche dynamische Last in den im Kommunikationsnetz angeordneten Vermittlungsstellen sowie im Signalisierungsnetz entsteht.

Die Aufgabe der Erfindung besteht darin, ein verbessertes Verfahren zur Bereitstellung von teilnehmerspezifischen Leistungs- und oder Dienstmerkmalen der eingangs angegebenen Art zu entwickeln.

Die Aufgabe wird durch die im Anspruch 1 angegebenen Merkmale gelöst. Vorteilhafte Ausgestaltungen der Erfindung sind in Unteransprüchen gekennzeichnet.

Der wesentliche Aspekt des erfindungsgemäßen Verfahrens ist darin zu sehen, daß zur Bereitstellung von für eine in einem Kommunikationsnetz festgelegten Teilnehmergruppe spezifische Leistungs- und/oder Dienstmerkmalen für einen an wenigstens eine Kommunikationsendeinrichtung der Teilnehmergruppe gerichteten, von einer nicht der Teilnehmergruppe zugeordneten Kommunikationsendeinrichtung initiierten, ankommenden Ruf in folgender Weise vorgegangen wird: In einer im Kommunikationsnetz vorhandenen, für die Teilnehmergruppe zuständigen Vermittlungsstelle werden die beim Verbindungsaufbau des ankommenden Rufes weiterzuleitenden Signalisierungsinformationen so modifiziert, daß diesem Ruf die teilnehmergruppenspezifischen Leistungs- und/oder Dienstmerkmale bereitgestellt werden. Diese Bereitstellung der teilnehmergruppenspezifischen Leistungs- und/oder Dienstmerkmale erfolgt vorzugsweise in einer für externe, nicht zur Teilnehmergruppe gehörenden Teilnehmer vorgesehenen Zugangsvermittlungsstelle, die im Kommunikationsnetz der Teilnehmergruppe zugeordnet ist.

Der Vorteil des erfindungsgemäßen Verfahrens besteht insbesondere darin, daß für den externen nicht zur Teilnehmergruppe gehörenden Teilnehmer keine administrativen Eingriffe in den privaten Rufnummernplan der Teilnehmergruppe bzw. in die Teilnehmerdaten notwendig sind. Außerdem werden keine zusätzlichen Hardwareaufwendungen benötigt. Des weiteren wird durch das erfindungsgemäße Verfahren eine zusätzliche Last in den für die Teilnehmergruppe zuständigen Vermittlungsstellen sowie im Signalisierungsnetz vermieden.

Neben der Bereitstellung der teilnehmerspezifischen Leistungs- und/oder Dienstmerkmale wird der ankommende Ruf vorzugsweise entsprechend eines internen Rufes innerhalb der Teilnehmergruppe behandelt. Hinsichtlich der Vergebührung eines solchen Rufes wirkt sich die Behandlung des ankommenden Rufes als internen Ruf als besonders günstig aus.

Eine Modifikation der weiterzuleitenden Signalisierungsinformationen wird zweckmäßigerweise in der Weise vorgenommen, daß die in den weiterzuleitenden Signalisierungsinformationen vorhandene Wählinformation z.B. in Form von Wahlziffern, die von einer nicht zur Teilnehmergruppe gehörenden externen Kommunikationsendeinrichtung initialisiert worden ist, in eine innerhalb der Teilnehmergruppe typische Wählinformation umgewandelt wird. Mit anderen Worten ausgedrückt: Die von extern initialisierte Wählinformation wird in eine interne Wählinformation umgesetzt, als ob der Ruf von einer internen zur Teilnehmergruppe gehörenden Kommunikationsendeinrichtung initiiert worden wäre.

Insbesondere für den Fall, daß ein nicht zur Teilnehmergruppe gehörender externer Teilnehmer Leistungs- bzw. Dienstmerkmale einer Teilnehmergruppe nutzen möchte, werden die weiterzuleitenden Signalisierungsinformationen sinnvollerweise mit für - die Teilnehmergruppe spezifischen Leistungs- und/oder Dienstmerkmalsinformationen ergänzt.

Eine Weiterbildung der Erfindung sieht vor, daß zur Bereitstellung eines solchen Leistungs- und/oder Dienstmerkmals ein weiterer Parameter im ISUP (ISDN User Part) in der Signalisierungsinformation übertragen wird. Solche Erweiterungsmöglichkeiten z.B. durch den Parameter APP (Application Transport Parameter) nach dem Application-Transport-ParameterMechanismus sind bereits standardisiert und erfordern daher keine Zusatzaufwendungen.

Hinsichtlich der Vergebührung des ankommenden Rufes hat sich als vorteilhaft herausgestellt, daß Vergebührungsinformationen zum ankommenden Ruf in der für die Teilnehmergruppe zuständigen Vermittlungsstelle ermittelt und von derselben erstellt werden. Die Vergebührungsinformationen betreffen den Rufverbindungsabschnitt zwischen einer im Kommunikationsnetz vorhandenen, für die Teilnehmergruppe zuständigen Vermittlungsstelle und der wenigstens einen der Teilnehmergruppe zugeordneten Kommunikationsendeinrichtung, wobei der Ruf nach einem für die Teilnehmergruppe spezifischen Tarif vergebührt wird.

Sonach entstehen für einen Teilnehmer insbesondere dann erhebliche Kostenvorteile, wenn die gerufene, zur Teilnehmergruppe gehörende Kommunikationsendeinrichtung sehr weit von der rufenden Kommunikationsendeinrichtung bzw. deren Ursprungsvermittlungsstelle entfernt ist.

Des weiteren kann die Teilnehmergruppe vorzugsweise durch eine Centrex-Gruppe oder eine Centrex-Untergruppe, z.B. einer Geschäftsgruppe, repräsentiert werden.

Sinnvollerweise kann der ankommende Ruf von einer in einem weiteren Kommunikationsnetz, z.B. einem Kommunikationsnetz eines anderen Netzbetreibers oder beispielsweise durch ein Telefondienste anbietendes Datennetz, wie z.B. dem Internet, angeordneten Kommunikationsendeinrichtung initiiert werden. Dieses weitere Kommunikationsnetz kann auch durch ein mobiles Kommunikationsnetz repräsentiert werden.

Eine weitere Ausgestaltung der Erfindung sieht vor, daß für den ankommenden Ruf in der für die Teilnehmergruppe zuständigen Vermittlungsstelle eine Berechtigungsprüfung durchgeführt wird. Vorzugsweise wird diese Berechtigungsprüfung anhand einer in der den Verbindungsaufbau einleitenden Signalisierungsinformation vorhandenen Rufnummer der rufenden Kommunikationsendeinrichtung oder anhand einer zusätzlich in der Signalisierungsinformation übermittelten Gruppenidentifikationsnummer durchgeführt.

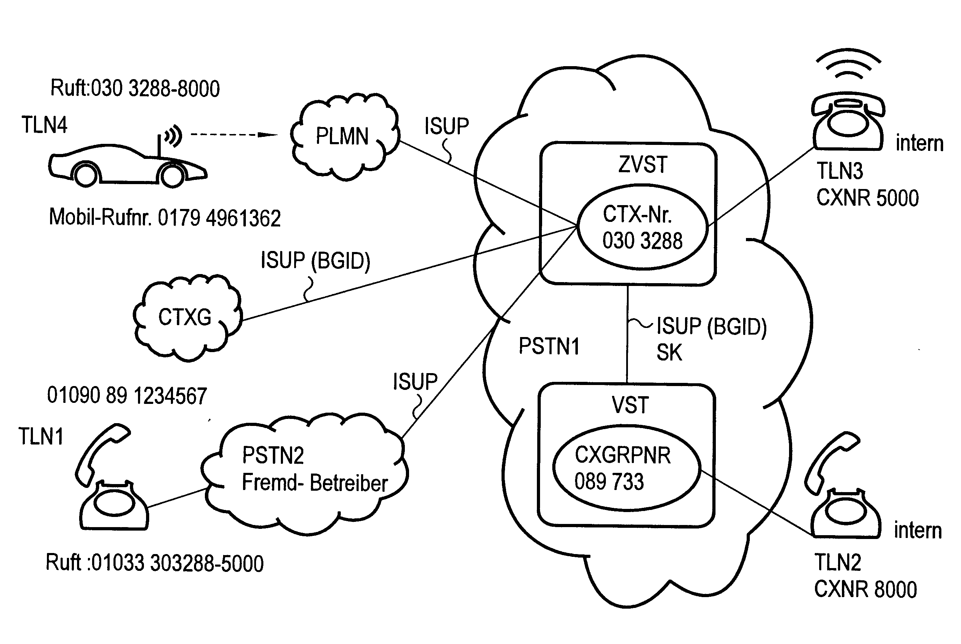

Nachstehend wird ein Ausführungsbeispiel der Erfindung unter Bezugnahme auf eine Zeichnung näher erläutert. In der Zeichnung zeigen:

Die Figur eine beispielhafte Konstellation im Kommunikationsnetz, bei der das erfindungsgemäße Verfahren angewendet werden kann.

In der Figur werden durch mehrere "Wolken" verschiedene Kommunikationsnetze PSTN1, z.B. eine öffentliches Telekommunikationsnetz PLMN, z.B. ein mobiles Kommunikationsnetz und PSTN2, z.B. ein Kommunikationsnetz eines weiteren Betreibers, angedeutet. Im Kommunikationsnetz PSTN2 ist beispielhaft eine Kommunikationsendeinrichtung TLN1 mit der Rufnummer 01090 89 1234567 angeordnet. Das Kommunikationsnetz PSTN2 wäre auch als ein privates Kommunikationsnetz denkbar, das eine Telekommunikationsanlage (TK-Anlage) mit daran angeschlossenen Kommunikationsendeinrichtungen z.B. TLN1 umfaßt. Im mobilen Kommunikationsnetz PLMN gibt es beispielhaft ein mobiles Endgerät TLN4 mit der Rufnummer 0179 4961362, symbolisiert durch ein "Auto". Desweiteren wird in der Figur eine in einem weiteren Kommunikationnetz festgelegte Centrex-Gruppe CTXG gezeigt, die ebenfalls durch eine "Wolke" gekennzeichnet wird.

Die genannten Kommunikationsnetze PSTN2 und PLMN sowie die Centrex-Gruppe CTXG stehen mit dem Kommunikationsnetz PSTN1 in Verbindung. Im Kommunikationsnetz PSTN1 sind zwei Vermittlungsstellen ZVST und VST vorhanden. In diesen Vermittlungsstellen sind Rufnummern für eine Centrex-Gruppe bzw. eine Centrex-Untergruppe, z.B. einer Geschäftsgruppe festgelegt. Insbesondere weist die Vermittlungsstelle ZVST eine Centrex-Zugangsrufnummer CTX-NR. 030 3288 auf. In der Vermittlungsstelle VST ist eine Geschäftsgruppenrufnummer CXGRPNR: 089 733 definiert. Die zur Centrex-Geschäftsgruppe gehörenden Kommunikationsendeinrichtungen können sowohl an der Vermittlungsstelle ZVST als auch an der Vermittlungsstelle VST angeschlossen sein. In der Figur ist beispielhaft die Kommunikationsendeinrichtung TLN3 mit der Rufnummer CXNR: 5000 an die Vermittlungsstelle ZVST angeschlossen. Die Kommunikationsendeinrichtung TLN2 mit der Rufnummer CXNR: 8000 weist z.B. eine Verbindung zur Vermittlungsstelle VST auf. Die Vermittlungsstellen ZVST und VST sind z.B. über einen Signalisierungskanal SK miteinander verbunden. Vorzugsweise wird über diesen Signalisierungskanal über den Zeichengabekanal Nr. 7 signalisiert. Die über diesen Signalisierungskanal gelenkten Signalisierungsinformationen weisen vorzugsweise einen sogenannten ISUP (ISDN User Part) auf. Des weiteren kann im ISUP zusätzlich eine Geschäftsgruppenidentifikationsnummer übermittelt werden, die in der Figur durch BGID gekennzeichnet ist.

Folgendes Szenario ist bei dieser Konstellation vorstellbar, bei der das erfindungsgemäße Verfahren durchgeführt wird:

Demnach wählt ein Teilnehmer mit seiner Kommunikationsendeinrichtung z.B. TLN1 beispielsweise die Rufnummer 01033 030 3288-5000. Der Ruf kommt an der Vermittlungsstelle ZVST, einer Zugangsvermittlungsstelle zur Centrex-Geschäftsgruppe, an. Entweder durch Eingabe einer Berechtigungscodes oder anhand der Rufnummer der rufenden Teilnehmerendeinrichtung wird eine Berechtigungsprüfung durchgeführt. Anschließend wird von der Zugangsvermittlungstelle der Ruf zur Kommunikationsendeinrichtung z.B. TLN 3 weitervermittelt. Hierbei wird der Ruf wie ein Centrex-interner Ruf behandelt, indem z.B. die Vergebührung der Rufverbindungsstrecke zwischen der Vermittlungsstelle ZVST und einer Centrex-Geschäftsgruppe zugeordneten Kommunikationsendeinrichtung TLN3 gemäß eines für die Centrex-Geschäftsgruppe üblichen Tarifes erfolgt. Es können dem rufenden Teilnehmer auch sämtliche Leistungs- bzw. Dienstmerkmale (z.B. eine Namenanzeige oder das Aufschalten auf eine bestehende Gesprächsverbindung), die einer solchen Centrex-Geschäftsgruppe zur Verfügung stehen, angeboten werden. Also wird der von der rufenden externen Teilnehmer wie ein virtueller zur Centrex-Geschäftsgruppe gehörender Teilnehmer behandelt. Die Signalisierungsinformationen des Rufes werden über das Signalisierungsnetz zur Zugangsvermittlungsstelle ZVST übertragen. Vorzugsweise werden die Ziel-Rufnummern im ISUP der Signalisierungsinformation übermittelt. Hierbei kann in der Zugangsvermittlungsstelle ZVST die in den Signalisierungsinformationen vorhandene Wählinformation zum gerufenen Teilnehmer in eine Centrex-spezifische Wählinformation umgewandelt werden, als ob der Ruf von einem Centrex-internen Teilnehmer initiiert worden wäre. Ebenso können in der Zugangsvermittlungsstelle ZVST die vom externen Teilnehmer gewünschten Centrex-spezifischen Leistungs- bzw. Dienstmerkmale durch Leistungs- bzw. Diensmerkmalsinformationen in den Signalisierungsinformationen ergänzt werden.

Für den Fall, daß der Ruf z.B. an die Kommunikationsendeinrichtung TLN2, die an einer anderen Vermittlungsstelle z.B. VST angeschlossen ist, wird wenigstens ein zusätzlicher Parameter z.B. die Geschäftsgruppenidentifikationsnummer BGID und/oder CTX-APP (Centrex Application Transport Parameter), der für ein bestimmtes Leistung- bzw. Dienstmerkmal reserviert ist, im ISUP von der Zugangsvermittlungsstelle ZVST zur Vermittlungsstelle VST übertragen.

Analog dazu ist auch ein Ruf von einer in einem mobilen Kommunikationsnetz z.B. PLMN registrierten mobilen Station TLN4 mit der Rufnummer 0179 4961362 an eine zur Centrex-Geschäftsgruppe zugeordneten Kommunikationsendeinrichtung z.B. TLN 2 denkbar. Dieser Rufes kann beispielsweise weiterhin wie ein externer Ruf behandelt werden, dem normalerweise die Centrex-Geschäftsgruppen-spezifischen Leistung- bzw. Dienstmerkmale nicht zur Verfügung gestellt werden. Dafür kann auf diesen Ruf eine Centrex-Geschäftsgruppen-spezifische Vergebührung angewendet werden. Auch ist es vorstellbar, daß für einen solchen Ruf keine Berechtigungsprüfung durchgeführt werden muß. Die Weitervermittlung des Rufes wird dann in der Zugangsvermittlungsstelle anhand der von einem Teilnehmer, z.B. dem mobilen Teilnehmer mit der mobilen Station TLN4, nachgewählten Ziffern durchgeführt.

Auch ist die Erfindung nicht auf einzelne rufende Teilnehmer beschränkt. Es ist auch möglich, externe Teilnehmergruppen (Centrex-Gruppe) z.B. CTXG in die Centrex-Geschäftsgruppen-spezifische Rufbehandlung einzubeziehen. In diesem Fall kann eine Geschäftsgruppenidentifikationsnummer BGID von einer Kommunikationsendeinrichtung der externen Centrex-Gruppe CTXG oder von einer in der Figur nicht dargestellten, für diese Centrex-Gruppe zuständigen Ursprungsvermittlungsstelle zur Zugangsvermittlungsstelle ZVST übermittelt werden. Die Berechtigungsprüfung in der Zugangsvermittlungsstelle ZVST kann hierbei anhand der Geschäftsgruppenidentifikationsnummer durchgeführt werden. Die Rufweiterleitung erfolgt dann in analoger Weise wie vorstehend erläutert.

## Patentansprüche

1. Verfahren zur Bereitstellung von für eine in einem Kommunikationsnetz (PSTN1) festgelegten Teilnehmergruppe spezifischen Leistungs- und/oder Dienstmerkmalen für einen an wenigstens eine Kommunikationsendeinrichtung (TLN2, TLN3) der Teilnehmergruppe gerichteten, von einer nicht der Teilnehmergruppe zugeordneten Kommunikationsendeinrichtung (TLN1, TLN4) initiierten, ankommenden Ruf, wobei in einer im Kommunikationsnetz vorhandenen, für die Teilnehmergruppe zuständigen Vermittlungsstelle (ZVST) die beim Verbindungsaufbau des ankommenden Rufes weiterzuleitenden Signalisierungsinformationen derart modifiziert werden, daß diesem Ruf die für die Teilnehmergruppe spezifischen Leistungs- und/oder Dienstmerkmale bereitgestellt werden.

2. Verfahren nach Anspruch 1, **dadurch gekennzeichnet, daß** der ankommende Ruf entsprechend eines internen Rufes innerhalb der Teilnehmergruppe behandelt wird.

3. Verfahren nach Anspruch 2, **dadurch gekennzeichnet, daß** der ankommende Ruf hinsichtlich der Vergebührung wie ein interner Ruf innerhalb der Teilnehmergruppe behandelt wird.

4. Verfahren nach einem der vorhergehenden Ansprüche, **dadurch gekennzeichnet, daß** die in den weiterzuleitenden Signalisierungsinformationen vorhandene, von der rufenden, nicht zur Teilnehmergruppe gehörenden Kommunikationsendeinrichtung initialisierten Wählinformation in eine innerhalb der Teilnehmergruppe typische Wählinformation umgewandelt wird.

5. Verfahren nach einem der vorhergehenden Ansprüche, **dadurch gekennzeichnet, daß** die weiterzuleitenden Signalisierungsinformationen mit für die Teilnehmergruppe spezifischen Leistungs- und/oder Dienstmerkmalsinformationen ergänzt werden.

6. Verfahren nach einem der vorhergehenden Ansprüche, **dadurch gekennzeichnet, daß** zur Bereitstellung eines solchen Leistungs- und/oder Dienstmerkmals ein weiterer Parameter im ISUP (ISDN User Part) in der Signalisierungsinformation übertragen wird.

7. Verfahren nach Anspruch 3, **dadurch gekennzeichnet, daß** Vergebührungsinformationen zum ankommenden Ruf in der genannten Vermittlungsstelle ermittelt und von derselben erstellt werden.

8. Verfahren nach einem der vorhergehenden Ansprüche, **dadurch gekennzeichnet, daß** die Teilnehmergruppe durch eine Centrex-Gruppe oder eine Centrex-Untergruppe repräsentiert wird.

9. Verfahren nach einem der vorhergehenden Ansprüche, **dadurch gekennzeichnet, daß** der Ruf von einer in einem weiteren Kommunikationsnetz (PSTN2, PLMN, CTXG) angeordneten Kommunikationsendeinrichtung initiiert wird.

10. Verfahren nach Anspruch 9, **dadurch gekennzeichnet, daß** das weitere Kommunikationsnetz durch ein mobiles Kommunikationsnetz (PLMN) repräsentiert wird.

11. Verfahren nach einem der vorhergehenden Ansprüche, **dadurch gekennzeichnet, daß** für den ankommenden Ruf in der für die Teilnehmergruppe zuständigen Vermittlungsstelle (ZVST) eine Berechtigungsprüfung durchgeführt wird.

12. Verfahren nach Anspruch 11, **dadurch gekennzeichnet, daß** die Berechtigungsprüfung anhand der in der den Verbindungsaufbau einleitenden Signalisierungsinformation vorhandenen Rufnummer der rufenden Kommunikationsendeinrichtung oder anhand einer zusätzlich in der Signalisierungsinformation übermittelten Gruppenidentifikationsnummer durchgeführt wird.
